# EUROPÄISCHE PATENTSCHRIFT

(11) **EP 2 005 115 B1**
(45) Veröffentlichungstag und Bekanntmachung des Hinweises auf die Patenterteilung: **07.09.2016**
(21) Anmeldenummer: 07723390.6
(22) Anmeldetag: 19.03.2007
(51) Int. Cl.: G01C 21/26, G08G 1/0968

(54) **NAVIGATIONSANORDNUNG UND -VERFAHREN FÜR EIN KRAFTFAHRZEUG**
NAVIGATION ARRANGEMENT AND METHOD FOR A MOTOR VEHICLE
DISPOSITIF ET PROCÉDÉ DE NAVIGATION POUR UN VÉHICULE AUTOMOBILE

(30) Priorität: 31.03.2006 US 395705; 11.05.2006 US 800222 P; 22.05.2006 US 439315; 21.06.2006 US 472622; 08.08.2006 US 501554
(43) Veröffentlichungstag der Anmeldung: 24.12.2008
(60) Teilanmeldung: 16182404.0
(73) Patentinhaber: Volkswagen Aktiengesellschaft, 38440 Wolfsburg (DE)
(72) Erfinder: NG, Brian, San Francisco, CA 94107 (US); ROSARIO, Daniel, Santa Cruz, CA 95060 (US); CHAN, Thomas, Mountain View, CA 94040 (US); STOSCHEK, Arne, Palo Alto, CA 94303 (US)
(86) Internationale Anmeldenummer: PCT/EP2007/002423
(87) Internationale Veröffentlichungsnummer: WO 2007/112849

(56) Entgegenhaltungen:
- EP-A- 0 694 895
- EP-B1- 0 243 635
- DE-A1- 4 039 887
- JP-A- 6 036 186
- JP-A- 10 241 094
- US-A1- 2005 030 202

## Beschreibung

Die Erfindung betrifft eine Navigationsanordnung für ein Kraftfahrzeug.

Die EP 0 875 730 B1 und die DE 698 15 940 T2 offenbaren ein Landkarteninformationsanzeigegerät zur Verwendung in einer Fahrzeugnavigationsvorrichtung mit einer Datenumsetzungseinrichtung zum Erfassen von Punkten von Kartendaten entsprechend einer Landkarte von einem Standpunkt durch eine Betrachtungslinie, die von dem Standpunkt ausgeht und bezüglich der Ebene der Landkarte einen Tiefenwinkel besitzt, und zum perspektivischen Projizieren der Punkte der Kartendaten auf eine Betrachtungsebene, die senkrecht zu der Betrachtungslinie festgelegt ist und einen vorgegebenen Abstand von dem Standpunkt besitzt, um Landkarten-Anzeigedaten zu erzeugen. Dabei wird eine Ansicht einer Umgebung aus der Vogelperspektive erzeugt. Ein Navigationssystem mit einer Ansicht einer Umgebung aus der Vogelperspektive ist zudem in der FR 2634707 sowie in der Zeitschrift autoconnect 2005, Vereinigte Motor-Verlage GmbH & Co. KG, Leuschnerstr. 1, 70174 Stuttgart, Deutschland, Seiten 18 und 21 offenbart.

Die EP 0 990 119 B1 offenbart eine digitale Personal-Kommunikationsvorrichtung mit einem Prozessor, mit einem Speicher, auf den der Prozessor zugreifen kann, und mit einer Anzeige, die mit dem Prozessor verbunden ist, wobei die Anzeige Karteninformationen und eine Position der digitalen Personal-Kommunikationsvorrichtung bezüglich der Karteninformation anzeigt, wobei die Karteninformation Wegpunkte, also Koordinaten enthält, wie vom Prozessor angewiesen. Die digitale Personal-Kommunikationsvorrichtung umfasst zudem eine Eingabeeinrichtung zum Bilden von Anfragen für Karteninformation und zum Auswählen von Wegpunkten und einen GPS-Empfänger, der mit dem Prozessor verbunden ist, wobei der Prozessor so programmiert ist, dass er Informationen, die er vom GPS-Empfänger erhält, so verarbeitet, dass daraus die Position der digitalen Personal-Kommunikationsvorrichtung bestimmt wird. Außerdem umfasst die digitale Personal-Kommunikationsvorrichtung einen Sender, der mit dem Prozessor verbunden ist, wobei der Prozessor so programmiert ist, dass er Karteninformation unter Verwendung des Senders von einem Kartenspeicher und einer Übertragungsvorrichtung anfordert, dass er die Karteninformation, die er vom Kartenspeicher und der Übertragungsvorrichtung erhalten hat, weiterverarbeitet, und dass er die Verfügbarkeit zusätzlicher gespeicherter Daten für Wegpunkte im Speicher bei Auswahl einer der Wegpunkte durch die Eingabeeinrichtung bestimmt, und dass er zusätzliche gespeicherte Daten unter Verwendung des Senders von dem Kartenspeicher und der Übertragungsvorrichtung bei Auswahl eines der Wegpunkte anfordert, falls zusätzliche gespeicherte Daten nicht im Speicher verfügbar sind.

Ferner offenbart die EP 0 694 895 A2 ein On-Board-Display, welches Informationen von einem externen Gerät empfangen kann. Dieses kann insbesondere zur Navigation eines Fahrzeugs verwendet werden. Dabei wird ein Ziel eingegeben. Eine Bake übermittelt dann die Zielinformationen zusammen mit einer ID des Fahrzeugs an ein Verkehrsinformationszentrum. Dieses wiederum sendet Routeninformationen an das Fahrzeug zurück.

Die EP 0 243 635 B1 beschreibt ein Straßenleitsystem. Das Straßenleitsystem umfasst eine Vielzahl von Antennen, die entlang der Straßenseiten an vorbestimmten Positionen installiert sind und mit wenigstens einer Datenübertragungseinrichtung zum Übertragen eines Datensignals zu Fahrzeugen verbunden sind. Zudem ist in einem Fahrzeug eine Navigationseinrichtung installiert, welche eine Datensignalempfangseinrichtung, ein Positionsbestimmungseinrichtung, eine Kalibriereinrichtung und eine Einrichtung zum Anzeigen der kalibrierten Positionsdaten für das Fahrzeug umfasst.

Schließlich beschreibt die US 2005/0030202 A1 ein Fahrzeug-zu-Fahrzeug Kommunikationssystem, mittels welchem Fahrzeuge untereinander kommunizieren können.

Es ist Aufgabe der Erfindung, die Navigation eines Kraftfahrzeuges zu verbessern.

Vorgenannte Aufgabe wird durch die Merkmale der Patentansprüche 1, 6, und 9 gelöst. Vorteilhafte Aus- und Weiterbildungen sind in den Unteransprüchen dargestellt.

Gemäß der Erfindung ist vorgesehen, dass die Navigationsanordnung für ein Kraftfahrzeug einen isolierten immobilen Speicher, wobei isoliert nicht mit einem Netzwerk verbunden bedeutet, zum Speichern einer Navigationsinformation, eine drahtlose Kommunikationsverbindung zwischen dem isolierten immobilen Speicher und dem Kraftfahrzeug zur Übertragung der Navigationsinformation von dem isolierten immobilen Speicher an das Kraftfahrzeug und eine in dem Kraftfahrzeug angeordnete Mensch-Maschine-Schnittstelle zur Ausgabe der Navigationsinformation an einen Bediener des Kraftfahrzeuges umfasst.

Erfindungsgemäß weist die Navigationsanordnung ein weiteres Kraftfahrzeug auf. Wenn sich das weitere Kraftfahrzeug außerhalb einer Reichweite des isolierten immobilen Speichers befindet, so dass keine direkte drahtlose Kommunikationsverbindung mit dem isolierten immobilen Speicher aufbaubar ist, eine drahtlose Kommunikationsverbindung zwischen dem Kraftfahrzeug und dem weiteren Kraftfahrzeug zur Übertragung der von dem isolierten immobilen Speicher an das Kraftfahrzeug übertragenen Navigationsinformation von dem Kraftfahrzeug an das weitere Kraftfahrzeug aufbaubar ist.

Eine Navigationsinformation im Sinne der Erfindung umfasst insbesondere eine Kartendarstellung sowie eine ein Navigationssystem betreffende Information zur ergänzenden Darstellung in der Kartendarstellung. Eine Navigationsinformation im Sinne der Erfindung umfasst insbesondere einen Streckenatlas, eine graphische Kartendarstellung sowie eine ein Navigationssystem betreffende Information zur ergänzenden Darstellung in der Kartendarstellung zusammen mit einer Position des Kraftfahrzeuges und/oder einem Routenvorschlag für das Kraftfahrzeug. Eine Navigationsinformation im Sinne der Erfindung ist insbesondere eine ein Navigationssystem betreffende Information, die von ihrer Natur her unabhängig von einer Position des Kraftfahrzeuges und/oder einem Routenvorschlag für das Kraftfahrzeug ist. Eine Navigationsinformation im Sinne der Erfindung kann auch einen Point-of-Interest (POI) und/oder eine einem Point-of-Interest (POI) zugeordnete Zusatzinformation umfassen. Eine übertragene Navigationsinformation im Sinne der Erfindung kann auch eine Update-Information zum Update einer bereits gespeicherten Navigationsinformation umfassen bzw. sein.

Unter einem isolierten Speicher soll im Sinne der Erfindung insbesondere ein nicht mit dem Internet verbundener Speicher verstanden werden. Unter einem immobilen Speicher soll im Sinne der Erfindung insbesondere ein Speicher verstanden werden, der fest mit der Erde verbunden ist und/oder der üblicherweise nicht bewegt wird. Ein Speicher, der üblicherweise nicht bewegt wird, kann in diesem Sinne z.B. ein einer Baustelle zugeordneter Speicher sein, der im Wesentlichen für die Dauer der Baustelle oder eines bestimmten Bauabschnitts im Wesentlichen nicht bewegt wird. Immobil kann in diesem Sinne z.B. ein für eine Baustelle eingerichteter temporärer Speicher sein. Ein Beispiel für einen isolierten immobilen Speicher zum Speichern einer Navigationsinformation kann z.B. ein Speicher am Eingang eines Nationalparks sein, der als Navigationsinformation Informationen über Campingplätze und/der Rangerstationen in dem Nationalpark an vorbeifahrende Kraftfahrzeuge überträgt. Isolierte immobile Speicher zum Speichern einer Navigationsinformation können z.B. auch in Straßenlaternen, Verkehrsschildern, Ampeln und/oder Wegweisern angeordnet sein. Entsprechende isolierte immobile Speicher können z.B. detaillierte Navigationsinformationen, wie z.B. Kartendarstellungen und/oder Bilder in einer hohen Auflösung, in Bezug auf ihre (unmittelbare) Umgebung umfassen.

Eine Aktualisierung isolierter immobiler Speicher bzw. der darin gespeicherten Navigationsinformationen kann in einer Ausgestaltung der Erfindung durch Weitergabe (hopping) entsprechender Informationen von einem isolierten immobilen Speicher zum nächsten isolierten immobilen Speicher erfolgen. Eine Aktualisierung isolierter immobiler Speicher bzw. der darin gespeicherten Navigationsinformationen kann alternativ oder zusätzlich in einer weiteren Ausgestaltung der Erfindung durch Übertragung entsprechender Informationen von einem (autorisierten) Kraftfahrzeug oder Rechner an den entsprechenden isolierten immobilen Speicher erfolgen. Eine Aktualisierung isolierter immobiler Speicher bzw. der darin gespeicherten Navigationsinformationen kann alternativ oder zusätzlich in einer weiteren Ausgestaltung der Erfindung durch Übertragung entsprechender Informationen von einem drahtlosen Internetzugang an den entsprechenden isolierten immobilen Speicher erfolgen. Eine Aktualisierung isolierter immobiler Speicher erfolgt insbesondere zu Zeiten, an denen sie kaum oder gar nicht genutzt werden.

In einer weiteren Ausgestaltung der Erfindung umfasst das Kraftfahrzeug weiterhin ein on-board-Navigationssystem zur Bestimmung der Position des Kraftfahrzeuges und zur Bestimmung eines Routenvorschlags, wobei die Mensch-Maschine-Schnittstelle dem on-board-Navigationssystem zugeordnet ist. Eine Mensch-Maschine-Schnittstelle gilt im Sinne der Erfindung insbesondere dann als einem on-board-Navigationssystem zugeordnet, wenn sie dazu eingerichtet ist, Informationen des on-board-Navigationssystems an einen Bediener auszugeben.

In einer weiteren Ausgestaltung der Erfindung umfasst die Navigationsanordnung weiterhin ein weiteres Kraftfahrzeug und eine drahtlose Kommunikationsverbindung zwischen dem isolierten immobilen Speicher und dem weiteren Kraftfahrzeug zur Übertragung der Navigationsinformation oder einer weiteren Navigationsinformation von dem Kraftfahrzeug an den isolierten immobilen Speicher. Eine drahtlose Kommunikationsverbindung zwischen dem isolierten immobilen Speicher und dem Kraftfahrzeug und eine drahtlose Kommunikationsverbindung zwischen dem isolierten immobilen Speicher und dem weiteren Kraftfahrzeug können dabei zeitlich versetzt bestehen.

In einer weiteren Ausgestaltung der Erfindung umfasst die Navigationsanordnung weiterhin einen räumlich von dem Kraftfahrzeug getrennten Server und eine drahtlose Kommunikationsverbindung zwischen dem Server und dem Kraftfahrzeug zur Übertragung der Position des Kraftfahrzeuges, eines gewünschtes Ziels für das Kraftfahrzeug, der Navigationsinformation und/oder einer weiteren Navigationsinformation von dem Kraftfahrzeug an den Server. Eine drahtlose Kommunikationsverbindung zwischen dem isolierten immobilen Speicher und dem Kraftfahrzeug und eine drahtlose Kommunikationsverbindung zwischen dem Server und dem Kraftfahrzeug können dabei zeitlich versetzt bestehen.

In einer weiteren Ausgestaltung der Erfindung ist mittels der drahtlosen Kommunikationsverbindung zwischen dem Server und dem Kraftfahrzeug ein Routenvorschlag für das Kraftfahrzeug, die Navigationsinformation und/oder eine weitere Navigationsinformation von dem Server an das Kraftfahrzeug übertragbar.

Vorgenannte Aufgabe wird zudem durch eine - insbesondere eines oder mehrere der vorgenannten Merkmale umfassende - Navigationsanordnung für ein Kraftfahrzeug gelöst, wobei die Navigationsanordnung einen isolierten immobilen Speicher, wobei isoliert nicht mit einem Netzwerk verbunden bedeutet, zum Speichern einer Navigationsinformation und eine drahtlose Kommunikationsverbindung zwischen dem isolierten immobilen Speicher und dem Kraftfahrzeug zur Übertragung der Navigationsinformation von dem Kraftfahrzeug an den isolierten immobilen Speicher umfasst.

Erfindungsgemäß weist die Navigationsanordnung ein weiteres Kraftfahrzeug auf. Wenn sich das weitere Kraftfahrzeug außerhalb einer Reichweite des isolierten immobilen Speichers befindet, so dass keine direkte drahtlose Kommunikationsverbindung mit dem isolierten immobilen Speicher aufbaubar ist, ist eine drahtlose Kommunikationsverbindung zwischen dem Kraftfahrzeug und dem weiteren Kraftfahrzeug zur Übertragung einer Navigationsinformation von dem weiteren Kraftfahrzeug an das Kraftfahrzeug aufbaubar und diese Navigationsinformation ist von dem Kraftfahrzeug an den isolierten immobilen Speicher übertragbar.

In einer weiteren Ausgestaltung der Erfindung umfasst die Navigationsanordnung weiterhin einen räumlich von dem Kraftfahrzeug getrennten Server und eine drahtlose Kommunikationsverbindung zwischen dem Server und dem Kraftfahrzeug zur Übertragung eines Routenvorschlags für das Kraftfahrzeug, der Navigationsinformation und/oder einer weiteren Navigationsinformation von dem Server an das Kraftfahrzeug. Eine drahtlose Kommunikationsverbindung zwischen dem isolierten immobilen Speicher und dem Kraftfahrzeug und eine drahtlose Kommunikationsverbindung zwischen dem Server und dem Kraftfahrzeug können dabei zeitlich versetzt bestehen.

In einer weiteren Ausgestaltung der Erfindung ist mittels der drahtlosen Kommunikationsverbindung zwischen dem Server und dem Kraftfahrzeug die Position des Kraftfahrzeuges, ein gewünschtes Ziel für das Kraftfahrzeug und/oder eine weitere Navigationsinformation von dem Kraftfahrzeug an den Server übertragbar.

Vorgenannte Aufgabe wird zudem durch eine - insbesondere eines oder mehrere der vorgenannten Merkmale umfassenden - Navigationsanordnung für ein Kraftfahrzeug gelöst, wobei die Navigationsanordnung ein Kraftfahrzeug, einen räumlich von dem Kraftfahrzeug getrennten Server, eine drahtlose Kommunikationsverbindung zwischen dem Server und dem Kraftfahrzeug zur Übertragung eines Routenvorschlags für das Kraftfahrzeug und/oder einer Navigationsinformation von dem Server an das Kraftfahrzeug und eine in dem Kraftfahrzeug angeordnete Mensch-Maschine-Schnittstelle zur Ausgabe der Navigationsinformation oder des Routenvorschlags an einen Bediener des Kraftfahrzeuges umfasst.

In einer weiteren Ausgestaltung der Erfindung ist mittels der drahtlosen Kommunikationsverbindung zwischen dem Server und dem Kraftfahrzeug die Position des Kraftfahrzeuges, das gewünschte Ziel für das Kraftfahrzeug und/oder eine weitere Navigationsinformation von dem Kraftfahrzeug an den Server übertragbar.

Die vorgenannte Aufgabe wird außerdem durch das erfindungsgemäße Verfahren zur Navigation eines Kraftfahrzeuges gelöst, bei dem von einem isolierten immobilen Speicher, wobei isoliert nicht mit einem Netzwerk verbunden bedeutet, zum Speichern zumindest einer Navigationsinformation über eine drahtlose Kommunikationsverbindung zwischen dem isolierten immobilen Speicher und dem Kraftfahrzeug zumindest die eine Navigationsinformation von dem isolierten immobilen Speicher an das Kraftfahrzeug und über eine in dem Kraftfahrzeug angeordnete Mensch-Maschine-Schnittstelle an den Bediener des Kraftfahrzeuges direkt oder bearbeitet übertragen wird.

Erfindungsgemäß ist vorgesehen, dass, wenn sich ein weiteres Kraftfahrzeug außerhalb einer Reichweite des isolierten immobilen Speichers befindet, so dass keine direkte drahtlose Kommunikationsverbindung mit dem isolierten immobilen Speicher aufbaubar ist, die von dem isolierten immobilen Speicher an das Kraftfahrzeug übertragene Navigationsinformation zwischen dem Kraftfahrzeug und dem weiteren Kraftfahrzeug über eine drahtlose Kommunikationsverbindung übertragen wird.

Nach einer Ausgestaltung des erfindungsgemäßen Verfahrens wird mittels einer on-board-Navigationseinrichtung in dem Kraftfahrzeug die Position des Kraftfahrzeuges ermittelt und mindestens ein Routenvorschlag bestimmt, wobei die Mensch-Maschine-Schnittstelle dem on-board-Navigationssystem des Kraftfahrzeuges zugeordnet ist.

Des weiteren kann vorgesehen sein, dass die Navigationsinformation oder eine weitere Navigationsinformation von einem weiteren Kraftfahrzeug über eine drahtlose Kommunikationsverbindung zwischen dem Kraftfahrzeug und dem isolierten immobilen Speicher von dem weiteren Kraftfahrzeug an den isolierten immobilen Speicher übertragen wird.

Nach einer weiteren Ausgestaltung der Erfindung wird von einem räumlich vom Kraftfahrzeug getrennten Server über eine drahtlose Kommunikationsverbindung ein Routenvorschlag für das Kraftfahrzeug und/oder zumindest die eine Navigationsinformation von dem Server an das Kraftfahrzeug übertragen, wobei vorzugsweise mittels der drahtlosen Kommunikationsverbindung zwischen dem Server und dem Kraftfahrzeug die Position des Kraftfahrzeuges, ein gewünschtes Ziel für das Kraftfahrzeug oder eine weitere Navigationsinformation von dem Kraftfahrzeug an den Server übertragen werden.

Eine drahtlose Kommunikationsverbindung zwischen dem Server und einem Kraftfahrzeug kann auch einen nicht drahtlosen Anteil umfassen. Eine drahtlose Kommunikationsverbindung zwischen dem Server und einem Kraftfahrzeug ist insbesondere eine Kommunikationsverbindung, die zumindest zum Kraftfahrzeug drahtlos ist. Eine drahtlose Kommunikationsverbindung zwischen dem Server und einem Kraftfahrzeug ist insbesondere eine drahtlose Verbindung ins Internet (z.B. WLAN). Drahtlose Kommunikationsverbindungen zwischen dem Server und einem Kraftfahrzeug können auch WIFI, WIMAX, RF, Mobilfunk etc. sein. Es kann vorgesehen sein, dass - abhängig von bestimmten Kriterien - (automatisch) zwischen alternativen drahtlosen Kommunikationsverbindungen zwischen dem Server und dem ersten Kraftfahrzeug gewählt wird. Diese Kriterien sind z.B. Kosten, Verfügbarkeit und/oder Bandbreite etc..

Die in Zusammenhang mit vorgenannter Erfindung bzw. mit vorgenannten Erfindungen beschriebenen drahtlosen Kommunikationsverbindungen sind während des bestimmungsgemäßen Betriebs des Kraftfahrzeuges bzw. der Kraftfahrzeuge etablierbar bzw. vorgesehen.

Die Erfindung ist für die Off-Road-Navigation geeignet.

Weitere Vorteile und Einzelheiten in Bezug auf die Erfindung ergeben sich aus der nachfolgenden Beschreibung von Ausführungsbeispielen.
- Fig. 1: zeigt ein Ausführungsbeispiel einer Navigationsanordnung für ein Kraftfahrzeug
- Fig. 2: zeigt ein Ausführungsbeispiel eines Kraftfahrzeuges mit einem Navigationssystem in einer Prinzipdarstellung;
- Fig. 3: zeigt ein Ausführungsbeispiel eines Verfahrens zur Betrieb einer Navigationsanordnung gemäß Fig. 1;
- Fig. 4: zeigt ein Ausführungsbeispiel einer Draufsicht-Darstellung einer in eine 3D-Graphik integrierten Route mittels eines Touchscreens;
- Fig. 5: zeigt ein Ausführungsbeispiel einer Vogelperspektive-Darstellung einer in eine 3D-Graphik integrierten Route mittels eines Touchscreens;
- Fig. 6: zeigt ein Ausführungsbeispiel einer Anzeige einer Eingabemaske zur Eingabe eines Start- und eines Zielortes mittels eines Touchscreens;
- Fig. 7: zeigt ein Ausführungsbeispiel einer Anzeige einer Eingabemaske zur Auswahl eines Zielortes mittels eines Touchscreens;
- Fig. 8: zeigt ein Ausführungsbeispiel einer Anzeige zur Auswahl bevorzugter Routen mittels eines Touchscreens;
- Fig. 9: zeigt ein Ausführungsbeispiel einer Anzeige einer Routenübersicht mittels eines Touchscreens;
- Fig. 10: zeigt ein Ausführungsbeispiel einer Anzeige zur Bestätigung einer Spracheingabe mittels eines Touchscreens;
- Fig. 11: zeigt ein Ausführungsbeispiel einer Anzeige eines durch Informationen ergänzten Satellitenbildes mittels eines Touchscreens; und
- Fig. 12: zeigt ein Ausführungsbeispiel eines Ausschnittes einer Anzeige eines Routenvorschlags zusammen mit einer follow-me-Funktion.

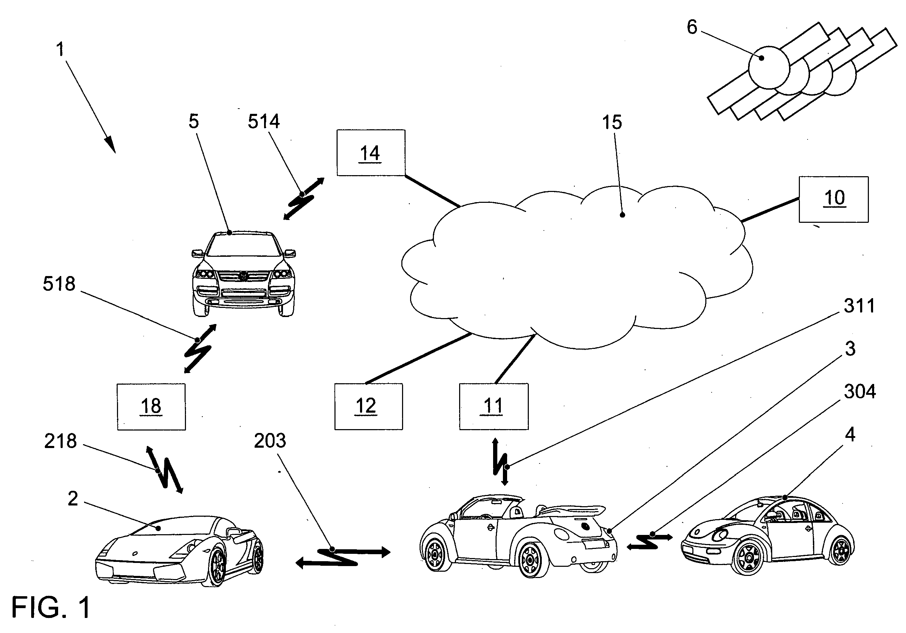

Fig. 1 zeigt ein Ausführungsbeispiel einer Navigationsanordnung 1 für Kraftfahrzeuge 2, 3, 4, 5. Die Navigationsanordnung 1 umfasst unter anderem das Kraftfahrzeug 2, einen isolierten immobilen Speicher 18 zum Speichern zumindest einer Navigationsinformation sowie eine drahtlose Kommunikationsverbindung 218 zwischen dem isolierten immobilen Speicher 18 und dem Kraftfahrzeug 2 zur Übertragung der Navigationsinformation von dem isolierten immobilen Speicher 18 an das Kraftfahrzeug 2. Eine derartige Navigationsinformation kann z.B. eine Kartendarstellung sowie eine ein Navigationssystem betreffende Information zur ergänzenden Darstellung in der Kartendarstellung umfassen. Eine derartige Navigationsinformation kann z.B. einen Point-of-Interest (POI) und/oder eine einem Point-of-Interest (POI) zugeordnete Zusatzinformation umfassen. Eine übertragene Navigationsinformation kann auch eine Update-Information zum Update einer bereits gespeicherten Navigationsinformation umfassen bzw. sein.

Der isolierte immobile Speicher 18 zum Speichern einer Navigationsinformation kann z.B. am Eingang eines Nationalparks vorgesehen sein, wobei als Navigationsinformation Informationen über Campingplätze und/der Rangerstationen in dem Nationalpark an das Kraftfahrzeug 2 übertragen werden. Der isolierte immobile Speicher 18 zum Speichern einer Navigationsinformation kann aber auch z.B. für die Dauer einer Baustelle oder eines bestimmten Bauabschnitts im Bereich der Baustelle vorgesehen sein, wobei als Navigationsinformation Informationen über die Baustelle bzw. durch die Baustelle bedingte Verkehrsinformationen, wie eine vorgeschlagene Umleitung, an das Kraftfahrzeug 2 übertragen werden.

Es kann auch vorgesehen sein, dass mittels einer drahtlosen Kommunikationsverbindung zwischen dem isolierten immobilen Speicher 18 und einem Kraftfahrzeug (wie unter Umständen z.B. dem Kraftfahrzeug 2 oder dem Kraftfahrzeug 5) eine Navigationsinformation von dem Kraftfahrzeug 5 an den isolierten immobilen Speicher 18 übertragen wird. So kann vorgesehen sein, dass das Kraftfahrzeug 5 berechtigt ist, Navigationsinformationen in den isolierten immobilen Speicher 18 mittels einer drahtlosen Kommunikationsverbindung 518 einzuspeisen. Die drahtlose Kommunikationsverbindung 218 zwischen dem isolierten immobilen Speicher 18 und dem Kraftfahrzeug 2 und die drahtlose Kommunikationsverbindung 518 zwischen dem isolierten immobilen Speicher 18 und dem Kraftfahrzeug 5 können dabei zeitlich versetzt bestehen.

In dem in Fig. 1 dargestellten Ausführungsbeispiel befindet sich das Kraftfahrzeug 3 außerhalb der Reichweite des isolierten immobilen Speichers 18, so dass keine direkte drahtlose Kommunikationsverbindung zwischen dem isolierten immobilen Speicher 18 und dem Kraftfahrzeug 3 aufgebaut werden kann. Es ist eine drahtlose Kommunikationsverbindung 203 zwischen dem Kraftfahrzeug 2 und dem Kraftfahrzeug 3 zur Übertragung der von dem isolierten immobilen Speicher 18 an das Kraftfahrzeug 2 übertragenen Navigationsinformation von dem Kraftfahrzeug 2 an das Kraftfahrzeug 3 aufbaubar. Es können auch weitere Kraftfahrzeuge als "Zwischenstationen" für die Übertragung der Navigationsinformation von dem Kraftfahrzeug 2 an das Kraftfahrzeug 3 vorgesehen sein.

Die Navigationsanordnung 1 umfasst in dem in Fig. 1 dargestellten Ausführungsbeispiel zudem einen räumlich von den Kraftfahrzeugen 2, 3, 4, 5 getrennten Server 10 mit Zugang zum Internet 15. Der Server 10 kann als off-board-Navigationssystem ausgestaltet sein. Dabei kann insbesondere vorgesehen sein, dass mittels des Servers 10 eine Berechnung eines Routenvorschlags (Soll-Route zu einem Ziel und/oder Soll-Fahrtrichtungsangabe) für ein Kraftfahrzeug, wie z.B. das Kraftfahrzeug 2, das Kraftfahrzeug 3, das Kraftfahrzeug 4 und/oder das Kraftfahrzeug 5, erfolgen kann. Ein solcher Routenvorschlag kann abhängig vom aktuellen Verkehr, von Baustellen, von Wetter- bzw. Umweltbedingungen und/oder von Sichtverhältnissen sein. Der Routenvorschlag kann auch abhängig von persönlichen Präferenzen (interessante Routen, Landmarks, Einkaufsgebiete) sein.

Die Navigationsanordnung 1 umfasst in dem in Fig. 1 dargestellten Ausführungsbeispiel weiterhin eine drahtlose Internetverbindung 311 zwischen dem Kraftfahrzeug 5 und dem Server 10 und eine drahtlose Internetverbindung 514 zwischen dem Kraftfahrzeug 3 und dem Server 10 zum Übertragen einer Navigationsinformation, wie z.B. einem Streckenatlas, einer graphischen Kartendarstellung sowie einer ein Navigationssystem betreffenden Information insbesondere zur ergänzenden Darstellung in der Kartendarstellung, wie z.B. graphische Darstellungen und Informationen zu Landmarks, Verkehrsinformationen und deren graphische Darstellung und/oder graphische Darstellungen und Informationen über Points-of-Interest, an das Kraftfahrzeug 3. Verkehrsinformationen in diesem Sinne können z.B. Informationen über Staus, Baustellen, Informationen über neue Straßen, Informationen über nicht mehr existierende Straßen, Informationen über gesperrte Straßen und/oder Informationen über neue oder aufgehobene Einbahnstraßen sein.

Zur Implementierung der Kommunikationsverbindung zwischen dem Server und Kraftfahrzeugen umfasst die Navigationsanordnung 1 Knoten 11, 12, 14, die einen drahtlosen Zugang in das Internet 15 ermöglichen. Dabei kann zwischen den Knoten 11, 12, 14 und Kraftfahrzeugen eine drahtlose Kommunikationsverbindung wie die drahtlose Internetverbindung 311 zum Kraftfahrzeug 3 aufgebaut werden. Die drahtlose Internetverbindung 311 ist insbesondere ein WLAN. Es kann aber auch vorgesehen sein, dass eine drahtlose Internetverbindung 311 als WIFI-Verbindung, WIMAXI-Verbindung, RFI-Verbindung, Mobilfunk-Verbindung, etc. implementiert ist. Es kann auch vorgesehen sein, dass - abhängig von bestimmten Kriterien - (automatisch) zwischen alternativen drahtlosen Kommunikationsverbindungen gewählt wird. Diese Kriterien sind z.B. Kosten, Verfügbarkeit und/oder Bandbreite etc..

In dem in Fig. 1 dargestellten Ausführungsbeispiel befindet sich das Kraftfahrzeug 4 außerhalb der Reichweite der Knoten 11, 12 und 14, so dass keine drahtlose Kommunikationsverbindung zwischen dem Server 10 und dem Kraftfahrzeug 4 aufgebaut werden kann. Es kann vorgesehen sein, dass eine drahtlose Kommunikationsverbindung 304 zwischen dem Kraftfahrzeug 3 und dem Kraftfahrzeug 4 aufbaubar ist. Auf dieses Weise können z.B. Navigationsinformationen zwischen dem Server 10 und dem Kraftfahrzeug 4 übertragen werden. Zudem können auf diese Weise die Position des Kraftfahrzeuges 4 und ein gewünschtes Ziel für das Kraftfahrzeug 4 an den Server 10 und basierend auf diesen Informationen ein Routenvorschlag von dem Server 10 an das Kraftfahrzeug 4 übertragen werden. Es können auch weitere Kraftfahrzeuge als "Zwischenstationen" für die Übertragung von Navigationsinformationen, Routenvorschlägen bzw. Positionen und Eingaben von dem Kraftfahrzeug 3 an das Kraftfahrzeug 4 bzw. von dem Kraftfahrzeug 4 an das Kraftfahrzeug 3 vorgesehen sein.

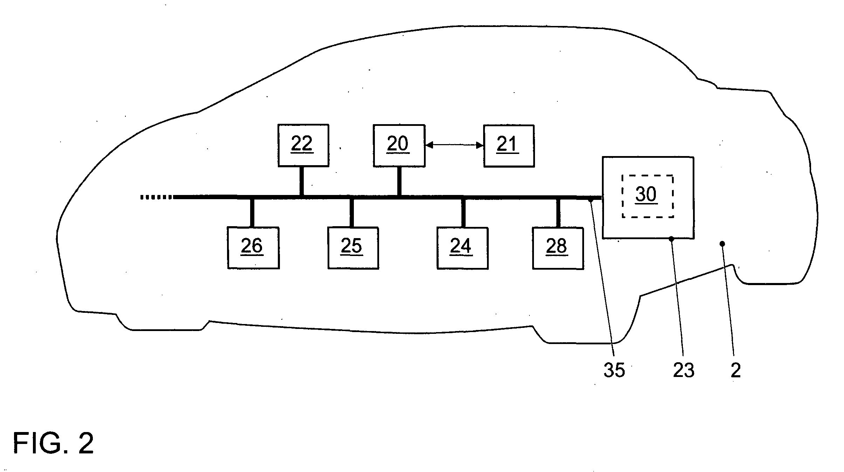

Fig. 2 zeigt ein Ausführungsbeispiel einer beispielhaften Implementierung des Kraftfahrzeuges 2 in einer Prinzipdarstellung, wobei die Kraftfahrzeuge 3, 4 und 5 in analoger Weise ausgestattet sind. Das Kraftfahrzeug 2 umfasst eine als Touchscreen 21 ausgestaltete Mensch-Maschine-Schnittstelle zur Ausgabe eines Routenvorschlags, der Position des Kraftfahrzeuges 2 und Navigationsinformationen an einen Bediener des Kraftfahrzeuges 2. Dazu ist der Touchscreen 21 mittels einer Anzeigesteuerung 20 ansteuerbar, die mittels eines Bussystems 35 mit einer (auch als drahtlose Internetschnittstelle einsetzbaren) Schnittstellenanordnung 22 für die drahtlosen Kommunikationsverbindungen 218 und 203 sowie für eine bei entsprechender Positionierung des Kraftfahrzeuges 2 mögliche drahtlose Kommunikationsverbindung zwischen dem Kraftfahrzeug 2 und dem Server 10 verbunden ist. Der Touchscreen 21 kann - gemäß dem vorliegenden Ausführungsbeispiel - auch zur Bedienung eines Infotainmentsystems 24, eines Telefons 25 oder einer Klimaautomatik 26 genutzt werden.

Das Kraftfahrzeug 2 umfasst ein - im vorliegenden Ausführungsbeispiel in ein on-board-Navigationssystem 23 integriertes - Ortungssystem 30 zur Bestimmung der Position des Kraftfahrzeuges 2, der Ausrichtung des Kraftfahrzeuges 2 und/oder der on-board-Zeit in Abhängigkeit von von in Fig. 1 mit Bezugszeichen 6 bezeichneten Satelliten gesendeten Signalen. Mittels des on-board-Navigationssystems 23 ist ein Routenvorschlag für das Kraftfahrzeug 2 zu einem mittels des Touchscreens 21 eingebbaren Ziel ermittelbar.

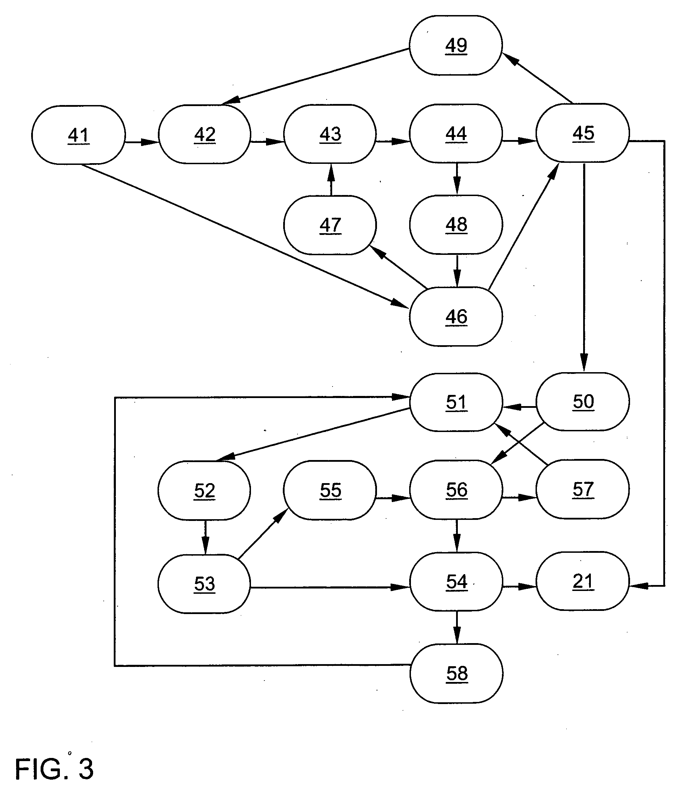

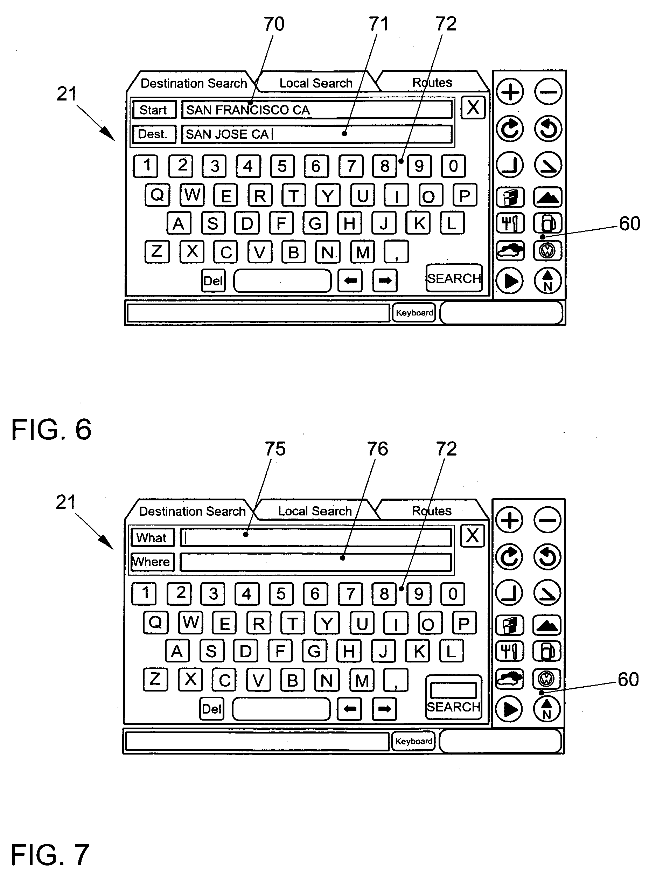

Fig. 3 zeigt ein Ausführungsbeispiel eines Verfahrens zum Betreiben der Navigationsanordnung 1 und zur Unterstützung der Navigation von Kraftfahrzeugen am Beispiel des Kraftfahrzeuges 2. Angestoßen durch eine- wie z.B. in Fig. 6 und Fig. 7 beispielhaft dargestellte - Eingabe eines Ziels, eines Points-of-Interest o. ä. sucht eine lokale Suchmaschine 41 in einer in einem in Fig. 2 mit Bezugszeichen 28 bezeichneten Speicher implementierten on-board-Datenbasis 42 für nicht-graphische Navigationsinformationen (z.B. einem Streckenatlas, Points-of-Interest o. ä.). Anschließend sucht eine online Suchmaschine 43 - unter Nutzung der drahtlosen Internetverbindung 203, des Kraftfahrzeuges 3, der drahtlosen Kommunikationsverbindung 311 und des Internets 15 - in einer dem Server 10 zugeordneten Datenbasis 44 für nicht-graphische Navigationsinformationen, in der die nicht-graphischen Navigationsinformationen abgelegt sind. Parallel sucht die lokale Suchmaschine 41 in einer in dem isolierten immobilen Speicher 18 implementierten Datenbasis 46 für nicht-graphische Navigationsinformationen. Das Ergebnis der vorgenannten Suchen ist eine XML-Datei 45 mit sortierten Orts- und GPS-Daten und ggf. anderen nicht-graphischen Navigationsinformationen. Die XML-Datei 45 wird von einer Update-Routine 49 genutzt, um die on-board-Datenbasis 42 zu ergänzen bzw. zu aktualisieren. Im Hintergrund und ggf. von einem Bediener unbemerkt werden die in der Datenbasis 46 gespeicherten Daten von einer Update-Routine 47 genutzt, um die on-board-Datenbasis 42 zu ergänzen bzw. zu aktualisieren. Optional kann darüber hinaus eine ebenfalls ggf. von einem Bediener unbemerkt arbeitende Update-Routine 48 vorgesehen sein, mittels der die Datenbasis 46 mit Navigationsinformationen der Datenbasis 44 ergänzt bzw. aktualisiert wird.

Anschließend sucht eine lokale Suchmaschine 50 in einer on-board-Datenbasis 51 für graphische Navigationsinformationen, insbesondere Kartendarstellungen. Danach sucht eine online Suchmaschine 52 in einer dem Server 10 zugeordneten Datenbasis 53 für graphische Navigationsinformationen. Parallel sucht die lokale Suchmaschine 51 in einer in dem isolierten immobilen Speicher 18 implementierten Datenbasis 56 für graphische Navigationsinformationen.

Das Ergebnis der Suchen in den Datenbasen 51, 53 und 56 sind ausgesuchte graphische Navigationsinformationen 54. Die ausgesuchten graphischen Navigationsinformationen 54 werden von einer Update-Routine 58 genutzt, um die on-board-Datenbasis 51 zu ergänzen bzw. zu aktualisieren. Im Hintergrund und ggf. von einem Bediener unbemerkt werden die in der Datenbasis 56 gespeicherten Daten von einer Update-Routine 57 genutzt, um die on-board-Datenbasis 51 zu ergänzen bzw. zu aktualisieren. Optional kann darüber hinaus eine ebenfalls ggf. von einem Bediener unbemerkt arbeitende Update-Routine 55 vorgesehen sein, mittels der die Datenbasis 56 mit graphischen Navigationsinformationen der Datenbasis 53 ergänzt bzw. aktualisiert wird.

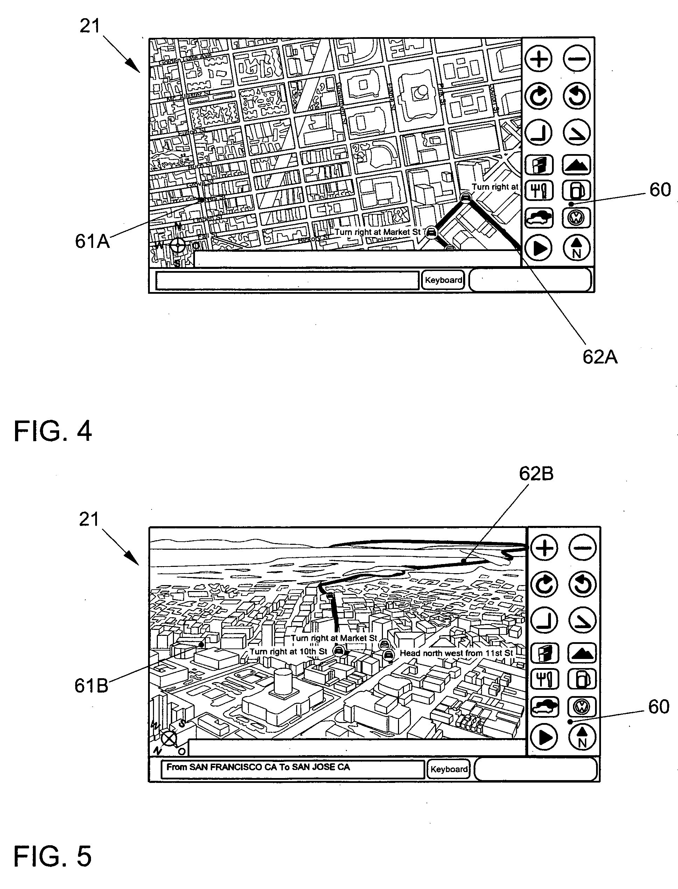

Zudem werden die ausgesuchten graphischen Navigationsinformationen 54 und die XML-Datei 45 mittels des Touchscreens 21 - wie beispielhaft unter Bezugnahme auf Fig. 4, Fig. 5, Fig. 8, Fig. 9, Fig. 10, Fig. 11 und Fig. 12 erläutert-dargestellt bzw. zur Darstellung von Informationen verwendet.

Fig. 4 zeigt ein Ausführungsbeispiel einer Draufsicht-Darstellung 61A eines in eine 3D-Graphik integrierten Routenvorschlags 62A mittels des Touchscreens 21. In dieser Darstellung können auch zusätzliche Informationen wie Points-Of-Interest (POIs) eingetragen werden. Neben der Draufsicht-Darstellung 61A der 3D-Graphik ist eine Bedienleiste 60 dargestellt. Mittels dieser Bedienleiste 60 kann die Darstellung verändert werden und/oder andere und/oder zusätzliche Funktionen aktiviert bzw. bedient werden. So kann mittels der Bedienleiste 60 die in Fig. 4 gewählte Draufsicht-Darstellung 61A der 3D-Graphik - wie in Fig. 5 dargestellt - in eine Vogelperspektive-Darstellung 61 B verändert werden. Entsprechend wird der Routenvorschlag 62B in der Vogelperspektiven-Darstellung integriert dargestellt.

Fig. 6 zeigt ein Ausführungsbeispiel einer Anzeige einer Eingabemaske zur Eingabe eines Start- und eines Zielortes mittels des Touchscreens 21. In dem dargestellten Ausführungsbeispiel sind dazu ein Starteingabefeld 70 und Zieleingabefeld 71 vorgesehen. Die Zieleingabe kann z.B. alphanumerisch durch eine dargestellte Tastatur 72 erfolgen. Alternativ oder zusätzlich kann die Zieleingabe auch durch Spracheingabe oder Schrifterkennung (insbesondere einer Schrifterkennung zur Identifikation asiatischer Schriftzeichen) bzw. gestischen Eingabe erfolgen. Die Selektion eines Ortes kann auf einer Karte, einem Satellitenbild und/oder einer 3D-Graphik erfolgen. In diesem Fall ist in einer Ausgestaltung eine Zoomfunktion für die Karte, das Satellitenbild und/oder die 3D-Graphik vorgesehen. Der Startort kann auch die aktuelle Position des Kraftfahrzeuges 2 sein.

Es kann auch vorgesehen sein, dass - wie in Fig. 7 dargestellt - ein Bediener des Kraftfahrzeuges 2 ein bestimmtes Objekt (Restaurant, Landmark, Geschäft, Tankstelle etc.) in einem bestimmten Such-Gebiet (Straße, Stadt, Postleitzahl, Kreis, etc.) suchen lassen kann. Dazu wird eine Eingabemaske mit einem Objekteingabefeld 75 zu Eingabe eines zu suchenden Objektes (Restaurant, Landmark, Geschäft, Tankstelle etc.) und ein Gebietseingabefeld 76 zu Eingabe des Such-Gebiets (Straße, Stadt, Postleitzahl, Kreis, etc.) dargestellt. Der Bediener kann anschließend einen Treffer aus den mittels dieser Suche ermittelten bzw. (z.B. in einer Karte, in einem Satellitenbild und/oder in einer 3D-Graphik) angebotenen Treffer aussuchen.

Es kann vorgesehen sein, dass die Auswertung einer Spracheingabe oder einer gestischen Eingabe on-board oder - sofern eine Verbindung zu dem Server 10 besteht - mittels des Servers 10 off-board erfolgt. In diesem Fall können z.B. Sprachbefehle als komprimierte Audiodateien zur Auswertung an den Server 10 gesandt werden. Es kann auch eine hybride on-board/off-board-Auswertung vorgesehen sein. Dabei erfolgt zunächst eine Auswertung einer Spracheingabe oder einer gestischen Eingabe on-board und eine "Feinauswertung" dieser Eingaben off-board mittels des Servers.

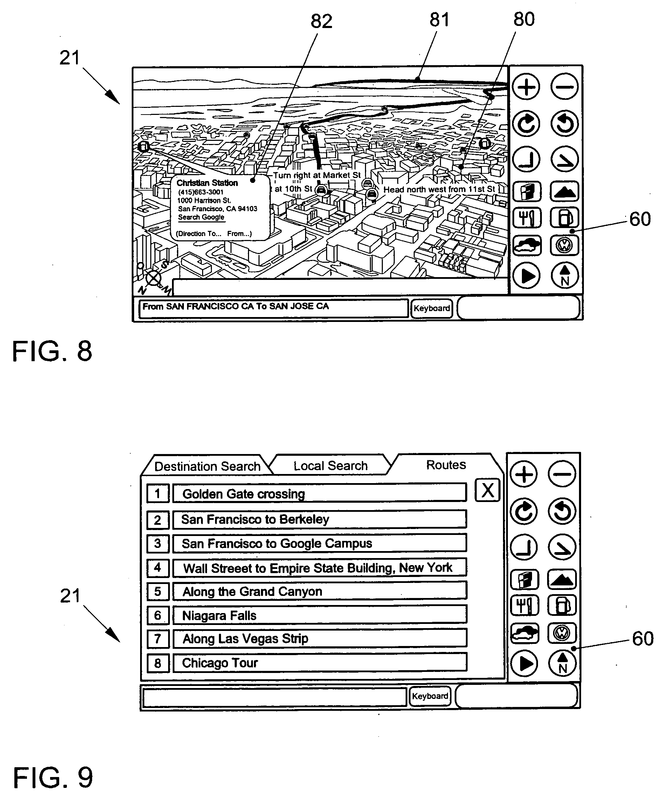

Erfolgt die Zieleingabe durch Spracheingabe so kann - wie in Fig. 8 dargestellt - eine graphische Bestätigung 82 der Spracheingabe erfolgen. Diese graphische Bestätigung 82 kann - wie in Fig. 8 dargestellt - z.B. (zeitlich begrenzt) eine Kartendarstellung überlagern. So zeigt das Ausführungsbeispiel gemäß Fig. 8 z.B. eine Vogelperspektiven-Darstellung 80 eines in eine 3D-Graphik integrierten Routenvorschlags 81 mittels des Touchscreens 21.

Es kann auch vorgesehen sein, dass bevorzugte Routen wählbar sind. So zeigt Fig. 9 ein Ausführungsbeispiel einer Anzeige zur Auswahl bevorzugter Routen mittels des Touchscreens 21.

Es kann auch eine automatische oder zumindest eine interaktiv-automatische Zielauswahl unter bestimmten Umständen vorgesehen sein. So kann vorgesehen sein, dass das Kraftfahrzeug 3 Betriebsinformationen des Kraftfahrzeuges 3 an den Server 10 überträgt. Eine Betriebsinformation des Kraftfahrzeuges 3 in diesem Sinne kann z.B. der Status der Tankfüllung, der Ölstand, oder eine Information über einen Defekt sein. Wird z.B. übertragen, dass der Tank fast leer ist, so wird eine Navigation zur nächsten Tankstelle angeboten und/oder vorgesehen. Wird z.B. übertragen, dass ein bestimmter Defekt vorliegt, so wird eine Navigation zur nächsten (geeigneten) Servicestation angeboten und/oder vorgesehen.

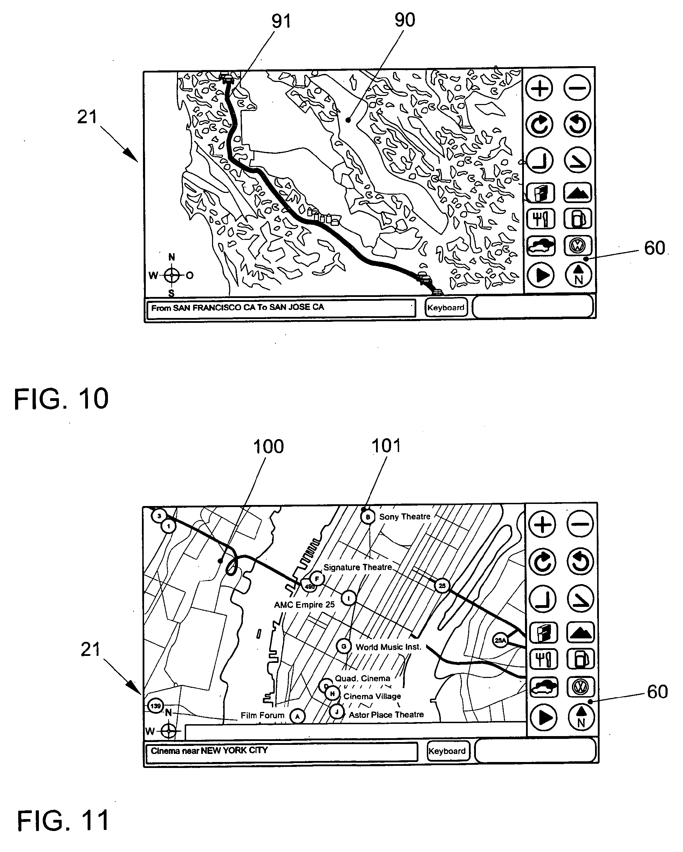

Fig. 10 zeigt ein Ausführungsbeispiel einer Anzeige einer Routenübersicht mittels des Touchscreens 21. Dabei bezeichnet Bezugszeichen 90 ein Satellitenbild und Bezugszeichen 91 einen Routenvorschlag. Die Routenübersicht kann auch, insbesondere aus der Vogelperspektive, in einem Fly-Through-Modus erfolgen.

Satellitenbilder 100 können - wie beispielhaft in Fig. 11 dargestellt - auch durch zusätzliche Informationen 101, wie z.B. Straßen, Straßennamen bzw. -bezeichnungen, Gebäude, Fahrzeuge, Verkehrsinformationen, (ggf. customized) POIs, call-out-boxes, Raststätten etc. überlagert bzw. ergänzt werden. Besondere Hinweise auf Raststätten oder Parkplätze können z.B. dann vorgesehen werden, wenn eine bestimmte Lenkdauer überschritten worden ist.

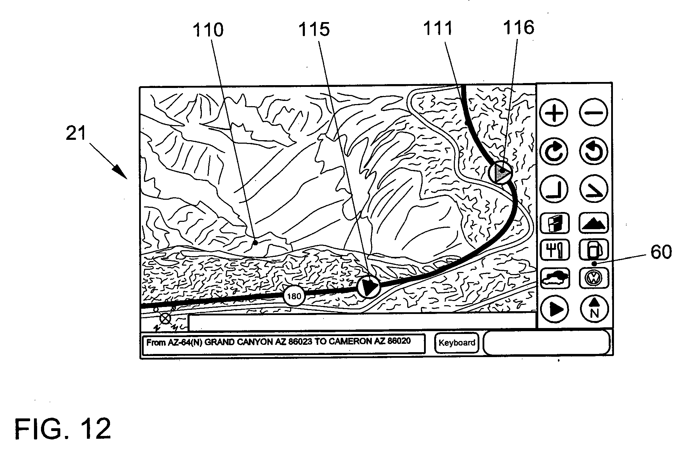

Es kann - wie in Fig. 12 dargestellt - auch eine follow-me-Funktion vorgesehen sein, bei der die Position 116 eines ausgewählten anderen Kraftfahrzeuges auf einer Karte, einem Satellitenbild und/oder einer 3D-Graphik 110, insbesondere zusammen mit der Position 115 des Kraftfahrzeuges 2, dargestellt wird. Darüber hinaus kann ein Routenvorschlag 111 dargestellt werden.

Es kann vorgesehen sein, dass ein Kraftfahrzeug wie das Kraftfahrzeug 2 mehr als eine Mensch-Maschine-Schnittstelle wie den Touchscreen 21 zur Ausgabe bzw. Darstellung von Routenvorschlägen, Positionen von Kraftfahrzeugen und Navigationsinformationen umfasst. So kann insbesondere vorgehen sein, dass eine einem Fahrer zugeordnete Mensch-Maschine-Schnittstelle andere Informationen anzeigt als eine weitere Mensch-Maschine-Schnittstelle oder dass die einem Fahrer zugeordnete Mensch-Maschine-Schnittstelle die gleichen Informationen wie eine weitere Mensch-Maschine-Schnittstelle jedoch in unterschiedlicher Weise anzeigt.

### Bezugszeichenliste

- 1: Navigationsanordnung
- 2, 2, 4, 5: Kraftfahrzeug
- 6: Satellit
- 10: Server
- 11, 12, 14: Knoten
- 15: Internet
- 18: isolierter immobiler Speicher
- 20: Anzeigesteuerung
- 21: Touchscreen
- 22: Schnittstellenanordnung
- 23: on-board-Navigationssystem
- 24: Infotainmentsystem
- 25: Telefon
- 26: Klimaautomatik
- 28: Speicher
- 30: Ortungssystem
- 35: Bussystem
- 41, 50: lokale Suchmaschine
- 42: on-board-Datenbasis für nicht-graphische Navigationsinformationen
- 43, 52: online Suchmaschine
- 44: einem Server zugeordnete Datenbasis für nicht-graphische Navigations-informationen
- 45: XML-Datei
- 46: in einem isolierten immobilen Speicher implementierte Datenbasis für nicht-graphische Navigationsinformationen
- 47, 48, 49, 55, 57, 58: Update-Routine
- 51: on-board-Datenbasis für graphische Navigationsinformationen
- 53: einem Server zugeordnete Datenbasis für graphische Navigations-informationen
- 54: ausgesuchte graphische Navigationsinformationen
- 56: in einem isolierten immobilen Speicher implementierte Datenbasis für graphische Navigationsinformationen
- 60: Bedienleiste
- 61A: Draufsicht-Darstellung
- 61B, 80: Vogelperspektiven-Darstellung
- 62A, 62B, 81, 91, 111: Routenvorschlag
- 70: Starteingabefeld
- 71: Zieleingabefeld
- 72: Tastatur
- 75: Objekteingabefeld
- 76: Gebietseingabefeld
- 82: graphische Bestätigung
- 90, 100: Satellietenbild
- 101: zusätzliche Informationen
- 110: 3D-Graphik
- 115: Position eines Kraftfahrzeuges
- 116: Position eines ausgewählten anderen Kraftfahrzeuges
- 203, 218, 304, 518: drahtlose Kommunikationsverbindung
- 311, 514: drahtlose Internetverbindung

## Patentansprüche

1. Navigationsanordnung (1) für ein Kraftfahrzeug (2, 3, 4, 5), welche ein Kraftfahrzeug, einen isolierten immobilen Speicher (18), wobei isoliert nicht mit einem Netzwerk verbunden bedeutet, zum Speichern zumindest einer Navigationsinformation, eine drahtlose Kommunikationsverbindung (218, 518) zwischen dem isolierten immobilen Speicher (18) und dem Kraftfahrzeug (2, 3, 4, 5) zur Übertragung der Navigationsinformation von dem isolierten immobilen Speicher (18) an das Kraftfahrzeug (2, 3, 4, 5) und eine in dem Kraftfahrzeug angeordnete Mensch-Maschine-Schnittstelle (24) zur Ausgabe der Navigationsinformation an einen Bediener des Kraftfahrzeuges aufweist,
**dadurch gekennzeichnet, dass**
die Navigationsanordnung (1) ein weiteres Kraftfahrzeug (2, 3, 4, 5) aufweist, und, wenn sich das weitere Kraftfahrzeug außerhalb einer Reichweite des isolierten immobilen Speichers (18) befindet, so dass keine direkte drahtlose Kommunikationsverbindung (218, 518) mit dem isolierten immobilen Speicher (18) aufbaubar ist, eine drahtlose Kommunikationsverbindung (203, 304) zwischen dem Kraftfahrzeug (2, 3, 4, 5) und dem weiteren Kraftfahrzeug (2, 3, 4, 5) zur Übertragung der von dem isolierten immobilen Speicher (18) an das Kraftfahrzeug (2, 3, 4, 5) übertragenen Navigationsinformation von dem Kraftfahrzeug (2, 3, 4, 5) an das weitere Kraftfahrzeug (2, 3, 4, 5) aufbaubar ist.

2. Navigationsanordnung (1) nach Anspruch 1, **dadurch gekennzeichnet, dass** das Kraftfahrzeug (2, 3, 4, 5) ein on-board-Navigationssystem (23) zur Bestimmung der Position des Kraftfahrzeuges (2, 3, 4, 5) und zur Bestimmung eines Routenvorschlags (91, 111) aufweist, wobei die Mensch-Maschine-Schnittstelle (24) dem on-board-Navigationssystem zugeordnet ist.

3. Navigationsanordnung (1) nach Anspruch 1 oder 2, **dadurch gekennzeichnet, dass** die Navigationsanordnung (1) eine drahtlose Kommunikationsverbindung (218, 518) zwischen dem isolierten immobilen Speicher (18) und dem weiteren Kraftfahrzeug (2, 3, 4, 5) zur Übertragung der der Navigationsinformation oder einer weiteren Navigationsinformation von dem Kraftfahrzeug an den isolierten immobilen Speicher (18) aufweist.

4. Navigationsanordnung (1) nach einem der Ansprüche 1 bis 3, **dadurch gekennzeichnet, dass** die Navigationsanordnung (1) einen räumlich von dem Kraftfahrzeug (2, 3, 4, 5) getrennten Server (10) und eine drahtlose Kommunikationsverbindung (311, 514) zwischen dem Server (10) und dem Kraftfahrzeug (2, 3, 4, 5) zur Übertragung eines Routenvorschlages (91, 111) für das Kraftfahrzeug (2, 3, 4, 5) und/oder der mindestens einen Navigationsinformation von dem Server (10) an das Kraftfahrzeug (2, 3, 4, 5) aufweist.

5. Navigationsanordnung (1) nach Anspruch 4, **dadurch gekennzeichnet, dass** mittels der drahtlosen Kommunikationsverbindung (311, 514) zwischen dem Server (10) und dem Kraftfahrzeug (2, 3, 4, 5) die Position des Kraftfahrzeuges (2, 3, 4, 5), ein gewünschtes Ziel für das Kraftfahrzeug (2, 3, 4, 5) oder eine weitere Navigationsinformation von dem Kraftfahrzeug (2, 3, 4, 5) an den Server (10) übertragbar ist.

6. Navigationsanordnung (1) für ein Kraftfahrzeug (2, 3, 4, 5), welche ein Kraftfahrzeug (2, 3, 4, 5), einen isolierten immobilen Speicher (18), wobei isoliert nicht mit einem Netzwerk verbunden bedeutet, zum Speichern zumindest einer Navigationsinformation und eine drahtlose Kommunikationsverbindung (218, 518) zwischen dem isolierten immobilen Speicher (18) und dem Kraftfahrzeug (2, 3, 4, 5) zur Übertragung von Navigationsinformationen von dem Kraftfahrzeug (2, 3, 4, 5) an den isolierten immobilen Speicher aufweist,
**dadurch gekennzeichnet, dass**
die Navigationsanordnung (1) ein weiteres Kraftfahrzeug (2, 3, 4, 5) aufweist, und, wenn sich das weitere Kraftfahrzeug außerhalb einer Reichweite des isolierten immobilen Speichers (18) befindet, so dass keine direkte drahtlose Kommunikationsverbindung (218, 518) mit dem isolierten immobilen Speicher (18) aufbaubar ist, eine drahtlose Kommunikationsverbindung (203, 304) zwischen dem Kraftfahrzeug (2, 3, 4, 5) und dem weiteren Kraftfahrzeug (2, 3, 4, 5) zur Übertragung einer Navigationsinformation von dem weiteren Kraftfahrzeug (2, 3, 4, 5) an das Kraftfahrzeug (2, 3, 4, 5) aufbaubar ist und diese Navigationsinformation von dem Kraftfahrzeug (2, 3, 4, 5) an den isolierten immobilen Speicher (18) übertragbar ist.

7. Navigationsanordnung (1) nach Anspruch 6, **dadurch gekennzeichnet, dass** die Navigationsanordnung (1) einen räumlich von dem Kraftfahrzeug (2, 3, 4, 5) getrennten Server (10) und eine drahtlose Kommunikationsverbindung (311, 514) zwischen dem Server (10) und dem Kraftfahrzeug (2, 3, 4, 5) zur Übertragung der Position des Kraftfahrzeuges, eines gewünschtes Ziels für das Kraftfahrzeug, einer Navigationsinformation oder einer weiteren Navigationsinformation von dem Kraftfahrzeug (2, 3, 4, 5) an den Server (10) aufweist.

8. Navigationsanordnung (1) nach Anspruch 6 oder 7, **dadurch gekennzeichnet, dass** mittels der drahtlosen Kommunikationsverbindung (311, 514) zwischen dem Server (10) und dem Kraftfahrzeug (2, 3, 4, 5) ein Routenvorschlag (91, 111) für das Kraftfahrzeug (2, 3, 4, 5), die zumindest eine Navigationsinformation oder eine weitere Navigationsinformation von dem Server (10) an das Kraftfahrzeug (2, 3, 4, 5) übertragbar ist.

9. Verfahren zur Navigation eines Kraftfahrzeuges, bei dem von einem isolierten immobilen Speicher (18), wobei isoliert nicht mit einem Netzwerk verbunden bedeutet, zum Speichern zumindest einer Navigationsinformation über eine drahtlose Kommunikationsverbindung (218, 518) zwischen dem isolierten immobilen Speicher (18) und dem Kraftfahrzeug (2, 3, 4, 5) zumindest die eine Navigationsinformation von dem isolierten immobilen Speicher (18) an das Kraftfahrzeug (2, 3, 4, 5) übertragen und über eine in dem Kraftfahrzeug angeordnete Mensch-Maschine-Schnittstelle (24) an einen Bediener des Kraftfahrzeuges (2, 3, 4, 5) direkt oder bearbeitet übertragen wird,
**dadurch gekennzeichnet, dass**
wenn sich ein weiteres Kraftfahrzeug (2, 3, 4, 5) außerhalb einer Reichweite des isolierten immobilen Speichers (18) befindet, so dass keine direkte drahtlose Kommunikationsverbindung (218, 518) mit dem isolierten immobilen Speicher (18) aufbaubar ist, die von dem isolierten immobilen Speicher (18) an das Kraftfahrzeug (2, 3, 4, 5) übertragene Navigationsinformation zwischen dem Kraftfahrzeug (2, 3, 4, 5) und dem weiteren Kraftfahrzeug (2, 3, 4, 5), über eine drahtlose Kommunikationsverbindung (203, 304) zwischen dem Kraftfahrzeug (2, 3, 4, 5) und dem weiteren Kraftfahrzeug (2, 3, 4, 5) übertragen wird.

10. Verfahren nach Anspruch 9, **dadurch gekennzeichnet, dass** mittels einer on-board-Navigationseinrichtung (23) in dem Kraftfahrzeug (2, 3, 4, 5) die Position des Kraftfahrzeuges ermittelt und mindestens ein Routenvorschlag (91, 111) bestimmt wird, wobei die Mensch-Maschine-Schnittstelle (24) dem on-board-Navigationssystem des Kraftfahrzeuges zugeordnet ist.

11. Verfahren nach Anspruch 9 oder 10, **dadurch gekennzeichnet, dass** die Navigationsinformation oder eine weitere Navigationsinformation von einem weiteren Kraftfahrzeug (2, 3, 4, 5) über die drahtlose Kommunikationsverbindung (218, 518) zwischen dem Kraftfahrzeug und dem isolierten immobilen Speicher (18) von dem weiteren Kraftfahrzeug (2, 3, 4, 5) an den isolierten immobilen Speicher (18) übertragen wird.

12. Verfahren nach einem der Ansprüche 9 bis 11 **dadurch gekennzeichnet, dass** von einem räumlich vom Kraftfahrzeug (2, 3, 4, 5) getrennten Server (10) über eine drahtlose Kommunikationsverbindung (311, 514) ein Routenvorschlag für das Kraftfahrzeug (2, 3, 4, 5) und/oder zumindest die eine Navigationsinformation von dem Server (10) an das Kraftfahrzeug (2, 3, 4, 5) übertragen werden.

13. Verfahren nach Anspruch 12, **dadurch gekennzeichnet, dass** mittels der drahtlosen Kommunikationsverbindung (311, 514) zwischen dem Server (10) und dem Kraftfahrzeug (2, 3, 4, 5) die Position des Kraftfahrzeuges, ein gewünschtes Ziel für das Kraftfahrzeug oder eine weitere Navigationsinformation von dem Kraftfahrzeug an den Server (10) übertragen werden.

## Claims

1. Navigation arrangement (1) for a motor vehicle (2, 3, 4, 5), which navigation arrangement has a motor vehicle, an isolated immobile memory (18), where isolated signifies not connected to a network, for storing at least one piece of navigation information, a wireless communication link (218, 518) between the isolated immobile memory (18) and the motor vehicle (2, 3, 4, 5) for the purpose of transmitting the navigation information from the isolated immobile memory (18) to the motor vehicle (2, 3, 4, 5) and a man/machine interface (24), arranged in the motor vehicle, for outputting the navigation information to an operator of the motor vehicle,
**characterized in that**
the navigation arrangement (1) has a further motor vehicle (2, 3, 4, 5), and, when the further motor vehicle is outside a range of the isolated immobile memory (18), so that it is not possible for a direct wireless communication link (218, 518) to be set up to the isolated immobile memory (18), it is possible for a wireless communication link (203, 304) to be set up between the motor vehicle (2, 3, 4, 5) and the further motor vehicle (2, 3, 4, 5) for the purpose of transmitting the navigation information transmitted from the isolated immobile memory (18) to the motor vehicle (2, 3, 4, 5) from the motor vehicle (2, 3, 4, 5) to the further motor vehicle (2, 3, 4, 5).

2. Navigation arrangement (1) according to Claim 1, **characterized in that** the motor vehicle (2, 3, 4, 5) has an on-board navigation system (23) for determining the position of the motor vehicle (2, 3, 4, 5) and for determining a route proposal (91, 111), wherein the man/machine interface (24) is associated with the on-board navigation system.

3. Navigation arrangement (1) according to Claim 1 or 2, **characterized in that** the navigation arrangement (1) has a wireless communication link (218, 518) between the isolated immobile memory (18) and the further motor vehicle (2, 3, 4, 5) for the purpose of transmitting the navigation information or a further piece of navigation information from the motor vehicle to the isolated immobile memory (18).

4. Navigation arrangement (1) according to one of Claims 1 to 3, **characterized in that** the navigation arrangement (1) has a server (10), which is physically separate from the motor vehicle (2, 3, 4, 5), and a wireless communication link (311, 514) between the server (10) and the motor vehicle (2, 3, 4, 5) for the purpose of transmitting a route proposal (91, 111) for the motor vehicle (2, 3, 4, 5) and/or the at least one piece of navigation information from the server (10) to the motor vehicle (2, 3, 4, 5).

5. Navigation arrangement (1) according to Claim 4, **characterized in that** the wireless communication link (311, 514) between the server (10) and the motor vehicle (2, 3, 4, 5) can be used to transmit the position of the motor vehicle (2, 3, 4, 5), a desired destination for the motor vehicle (2, 3, 4, 5) or a further piece of navigation information from the motor vehicle (2, 3, 4, 5) to the server (10).

6. Navigation arrangement (1) for a motor vehicle (2, 3, 4, 5), which navigation arrangement has a motor vehicle (2, 3, 4, 5), an isolated immobile memory (18), where isolated signifies not connected to a network, for storing at least one piece of navigation information and a wireless communication link (218, 518) between the isolated immobile memory (18) and the motor vehicle (2, 3, 4, 5) for the purpose of transmitting navigation information from the motor vehicle (2, 3, 4, 5) to the isolated immobile memory,
**characterized in that**
the navigation arrangement (1) has a further motor vehicle (2, 3, 4, 5), and, when the further motor vehicle is outside a range of the isolated immobile memory (18), so that it is not possible for a direct wireless communication link (218, 518) to be set up to the isolated immobile memory (18), it is possible for a wireless communication link (203, 304) to be set up between the motor vehicle (2, 3, 4, 5) and the further motor vehicle (2, 3, 4, 5) for the purpose of transmitting a piece of navigation information from the further motor vehicle (2, 3, 4, 5) to the motor vehicle (2, 3, 4, 5) and for this navigation information to be transmitted from the motor vehicle (2, 3, 4, 5) to the isolated immobile memory (18).

7. Navigation arrangement (1) according to Claim 6, **characterized in that** the navigation arrangement (1) has a server (10), which is physically separate from the motor vehicle (2, 3, 4, 5), and a wireless communication link (311, 514) between the server (10) and the motor vehicle (2, 3, 4, 5) for the purpose of transmitting the position of the motor vehicle, a desired destination for the motor vehicle, a piece of navigation information or a further piece of navigation information from the motor vehicle (2, 3, 4, 5) to the server (10).

8. Navigation arrangement (1) according to Claim 6 or 7, **characterized in that** the wireless communication link (311, 514) between the server (10) and the motor vehicle (2, 3, 4, 5) can be used to transmit a route proposal (91, 111) for the motor vehicle (2, 3, 4, 5), the at least one piece of navigation information or a further piece of navigation information from the server (10) to the motor vehicle (2, 3, 4, 5).

9. Method for navigating a motor vehicle, in which an isolated immobile memory (18), where isolated signifies not connected to a network, for storing at least one piece of navigation information uses a wireless communication link (218, 518) between the isolated immobile memory (18) and the motor vehicle (2, 3, 4, 5) to transmit at least the one piece of navigation information from the isolated immobile memory (18) to the motor vehicle (2, 3, 4, 5), and a man/machine interface (24) arranged in the motor vehicle is used to transmit said navigation information to an operator of the motor vehicle (2, 3, 4, 5) directly or in edited form, **characterized in that**
when a further motor vehicle (2, 3, 4, 5) is outside a range of the isolated immobile memory (18), so that it is not possible for a direct wireless communication link (218, 518) to be set up to the isolated immobile memory (18), the navigation information transmitted from the isolated immobile memory (18) to the motor vehicle (2, 3, 4, 5) is transmitted between the motor vehicle (2, 3, 4, 5) and the further motor vehicle (2, 3, 4, 5) via a wireless communication link (203, 304) between the motor vehicle (2, 3, 4, 5) and the further motor vehicle (2, 3, 4, 5).

10. Method according to Claim 9, **characterized in that** an on-board navigation device (23) in the motor vehicle (2, 3, 4, 5) is used to ascertain the position of the motor vehicle and to determine at least one route proposal (91, 111), wherein the man/machine interface (24) is associated with the on-board navigation system of the motor vehicle.

11. Method according to Claim 9 or 10, **characterized in that** the navigation information or a further piece of navigation information from a further motor vehicle (2, 3, 4, 5) is transmitted from the further motor vehicle (2, 3, 4, 5) to the isolated immobile memory (18) via the wireless communication link (218, 518) between the motor vehicle and the isolated immobile memory (18).

12. Method according to one of Claims 9 to 11, **characterized in that** a server (10), which is physically separate from the motor vehicle (2, 3, 4, 5), uses a wireless communication link (311, 514) to transmit a route proposal for the motor vehicle (2, 3, 4, 5) and/or at least the one piece of navigation information from the server (10) to the motor vehicle (2, 3, 4, 5).

13. Method according to Claim 12, **characterized in that** the wireless communication link (311, 514) between the server (10) and the motor vehicle (2, 3, 4, 5) is used to transmit the position of the motor vehicle, a desired destination for the motor vehicle or a further piece of navigation information from the motor vehicle to the server (10).

## Revendications

1. Système de navigation (1) pour un véhicule automobile (2, 3, 4, 5), qui comporte un véhicule automobile, une mémoire isolée immobile (18), dans lequel, par isolé, on entend non relié à un réseau, pour la mémorisation d'au moins une information de navigation, une liaison de communication sans fil (218, 518) entre la mémoire immobile isolée (18) et le véhicule automobile (2, 3, 4, 5) pour transmettre l'information de navigation de la mémoire immobile isolée (18) au véhicule automobile (2, 3, 4, 5) et une interface homme-machine (24) disposée dans le véhicule automobile pour délivrer l'information de navigation à un opérateur du véhicule automobile,
**caractérisé en ce que** le système de navigation (1) comporte un autre véhicule automobile (2, 3, 4, 5) et, lorsque l'autre véhicule automobile se trouve au-delà d'une portée de la mémoire immobile isolée (18), de sorte qu'aucune liaison de communication (218, 518) directe sans fil avec la mémoire immobile isolée (18) ne peut être établie, une liaison de communication sans fil (203, 304) peut être établie entre le véhicule automobile (2, 3, 4, 5) et l'autre véhicule automobile (2, 3, 4, 5) pour transmettre l'information de navigation transmise de la mémoire immobile isolée (18) au véhicule automobile (2, 3, 4, 5) du véhicule automobile (2, 3, 4, 5) à l'autre véhicule automobile (2, 3, 4, 5).

2. Système de navigation (1) selon la revendication 1, **caractérisé en ce que** le véhicule automobile (2, 3, 4, 5) comporte un système de navigation embarqué (23) pour déterminer la position du véhicule automobile (2, 3, 4, 5) et pour déterminer une proposition d'itinéraire (91, 111), dans lequel l'interface homme-machine (24) est associée au système de navigation embarqué.

3. Système de navigation (1) selon la revendication 1 ou 2, **caractérisé en ce que** le système de navigation (1) comporte une liaison de communication sans fil (218, 518) entre la mémoire immobile isolée (18) et l'autre véhicule automobile (2, 3, 4, 5) pour transmettre l'information de navigation ou une autre information de navigation du véhicule automobile à la mémoire immobile isolée (18).

4. Système de navigation (1) selon l'une quelconque des revendications 1 à 3, **caractérisé en ce que** le système de navigation (1) comporte un serveur (10) séparé spatialement du véhicule automobile (2, 3, 4, 5) et une liaison de communication sans fil (311, 514) entre le serveur (10) et le véhicule automobile (2, 3, 4, 5) pour transmettre une proposition d'itinéraire (91, 111) pour le véhicule automobile (2, 3, 4, 5) et/ou l'au moins une information de navigation du serveur (10) au véhicule automobile (2, 3, 4, 5).

5. Système de navigation (1) selon la revendication 4, **caractérisé en ce que** la position du véhicule automobile (2, 3, 4, 5), une destination souhaitée pour le véhicule automobile (2, 3, 4, 5) ou une autre information de navigation peut être transmise au moyen de la liaison de communication sans fil (311, 514) entre le serveur (10) et le véhicule automobile (2, 3, 4, 5) du véhicule automobile (2, 3, 4, 5) au serveur (10).

6. Système de navigation (1) pour un véhicule automobile (2, 3, 4, 5), qui comporte un véhicule automobile (2, 3, 4, 5), une mémoire isolée immobile (18), dans lequel, par isolé, on entend non relié à un réseau, pour la mémorisation d'au moins une information de navigation et une liaison de communication sans fil (218, 518) entre la mémoire immobile isolée (18) et le véhicule automobile (2, 3, 4, 5) pour transmettre des informations de navigation du véhicule automobile (2, 3, 4, 5) à la mémoire immobile isolée,
**caractérisé en ce que** le système de navigation (1) comporte un autre véhicule automobile (2, 3, 4, 5) et, lorsque l'autre véhicule automobile se trouve au-delà d'une portée de la mémoire immobile isolée (18), de sorte qu'aucune liaison de communication sans fil directe (218, 518) avec la mémoire immobile isolée (18) ne peut être établie, une liaison de communication sans fil (203, 304) entre le véhicule automobile (2, 3, 4, 5) et l'autre véhicule automobile (2, 3, 4, 5) peut être établie pour transmettre une information de navigation de l'autre véhicule automobile (2, 3, 4, 5) au véhicule automobile (2, 3, 4, 5) et ladite information de navigation peut être transmise du véhicule automobile (2, 3, 4, 5) à la mémoire immobile isolée (18).

7. Système de navigation (1) selon la revendication 6, **caractérisé en ce que** le système de navigation (1) comporte un serveur (10) séparé spatialement du véhicule automobile (2, 3, 4, 5) et une liaison de communication sans fil (311, 514) entre le serveur (10) et le véhicule automobile (2, 3, 4, 5) pour transmettre la position du véhicule automobile, une destination souhaitée pour le véhicule automobile, une information de navigation ou une autre information de navigation du véhicule automobile (2, 3, 4, 5) au serveur (10).

8. Système de navigation (1) selon la revendication 6 ou 7, **caractérisé en ce qu'**une proposition d'itinéraire (91, 111) pour le véhicule automobile (2, 3, 4, 5), ladite au moins une information de navigation ou une autre information de navigation peut être transmise du serveur (10) au véhicule automobile (2, 3, 4, 5) au moyen de la liaison de communication sans fil (311, 514) entre le serveur (10) et le véhicule automobile (2, 3, 4, 5).

9. Procédé pour la navigation d'un véhicule automobile, dans lequel au moins ladite une information de navigation est transmise de la mémoire immobile isolée (18) au véhicule automobile (2, 3, 4, 5) par une mémoire immobile isolée (18), dans lequel par isolé, on entend non relié à un réseau, pour la mémorisation d'au moins une information de navigation, par l'intermédiaire d'une liaison de communication sans fil (218, 518) entre la mémoire immobile isolée (18) et le véhicule automobile (2, 3, 4, 5) et est transmise directement ou après traitement par l'intermédiaire d'une interface homme-machine (24) disposée dans le véhicule automobile à un opérateur du véhicule automobile (2, 3, 4, 5),
**caractérisé en ce que**, lorsqu'un autre véhicule automobile (2, 3, 4, 5) se trouve au-delà d'une portée de la mémoire immobile isolée (18), de sorte qu'aucune liaison de communication sans fil directe (218, 518) avec la mémoire immobile isolée (18) ne peut être établie, l'information de navigation transmise entre le véhicule automobile (2, 3, 4, 5) et l'autre véhicule automobile (2, 3, 4, 5) est transmise de la mémoire immobile isolée (18) au véhicule automobile (2, 3, 4, 5), par l'intermédiaire d'une liaison de communication sans fil (203, 304) entre le véhicule automobile (2, 3, 4, 5) et l'autre véhicule automobile (2, 3, 4, 5).

10. Procédé selon la revendication 9, **caractérisé en ce que** la position du véhicule automobile est obtenue et au moins une proposition d'itinéraire (91, 111) est déterminée au moyen d'un dispositif de navigation embarqué (23) dans le véhicule automobile (2, 3, 4, 5), dans lequel l'interface homme-machine (24) est associée au système de navigation embarqué du véhicule automobile.

11. Procédé selon la revendication 9 ou 10, **caractérisé en ce que** l'information de navigation ou une autre information de navigation d'un autre véhicule automobile (2, 3, 4, 5) est transmise par l'intermédiaire de la liaison de communication sans fil (218, 518) entre le véhicule automobile et la mémoire immobile isolée (18) de l'autre véhicule automobile (2, 3, 4, 5) à la mémoire immobile isolée (18).

12. Procédé selon l'une quelconque des revendications 9 à 11 **caractérisé en ce qu'**une proposition d'itinéraire pour le véhicule automobile (2, 3, 4, 5) et/ou au moins ladite une information de navigation sont transmises par un serveur (10) séparé spatialement du véhicule automobile (2, 3, 4, 5) par l'intermédiaire d'une liaison de communication sans fil (311, 514) du serveur (10) au véhicule automobile (2, 3, 4, 5).

13. Procédé selon la revendication 12, **caractérisé en ce que** la position du véhicule automobile, une destination souhaitée pour le véhicule automobile ou une autre information de navigation sont transmises du véhicule automobile au serveur (10) au moyen de la liaison de communication sans fil (311, 514) entre le serveur (10) et le véhicule automobile (2, 3, 4, 5).
